# EUROPEAN PATENT SPECIFICATION

(11) **EP 1 142 231 B1**
(45) Date of publication and mention of the grant of the patent: **02.11.2005**
(21) Application number: 00972701.7
(22) Date of filing: 06.10.2000
(51) Int. Cl.: H04L 12/58, H04L 29/06

(54) **INVISIBLE ENCODING FOR DELIVERY CONTROL**
UNSICHTBARE CODIERUNG ZUR ABGABESTEUERUNG
CODAGE INVISIBLE POUR COMMANDE DE D BIT

(30) Priority: 22.10.1999 US 425652
(43) Date of publication of application: 10.10.2001
(73) Proprietor: Koninklijke Philips Electronics N.V., 5621 BA Eindhoven (NL)
(72) Inventor: AHERN, Keith, NL-5656 AA Eindhoven (NL)
(74) Representative: Groenendaal, Antonius W. M.
(86) International application number: PCT/EP2000/009876
(87) International publication number: WO 2001/031862

(56) References cited:
- EP-A- 0 263 253
- WO-A-86/05294
- CHUNG-MING HUANG ET AL: "MULTIMEDIA E-MAIL: THE EVOLUTION APPROACH BASED ON ADAPTERS" SOFTWARE PRACTICE & EXPERIENCE,GB,JOHN WILEY & SONS LTD. CHICHESTER, vol. 24, no. 9, 1 September 1994 (1994-09-01), pages 785-800, XP000655471 ISSN: 0038-0644

## Description

### BACKGROUND OF THE INVENTION

### 1. Field of the Invention

This invention relates to the field of communications, and in particular to the encoding of electronic documents, for example, electronic messages, that contain delivery commands.

### 2. Description of Related Art

As methods of encoding information change to allow for greater capabilities and efficiencies, the likelihood of incompatibility with prior art systems increases. This incompatibility often occurs because the control information related to the communication of the electronic document, in particular of a message, is incompatible with different systems. That is, a text message is typically encoded in an ASCII format that is generally compatible with most, if not all, display or printing devices, but the control information, on the other hand, will only be compatible with systems that are designed to be compatible with the encoding of this control information. For example, the command that instructs an e-mail system to mark a message as "urgent", or that instructs a pager to periodically "beep" until the message is responded to, may have unpredictable results on legacy devices that do not recognize delivery control commands.

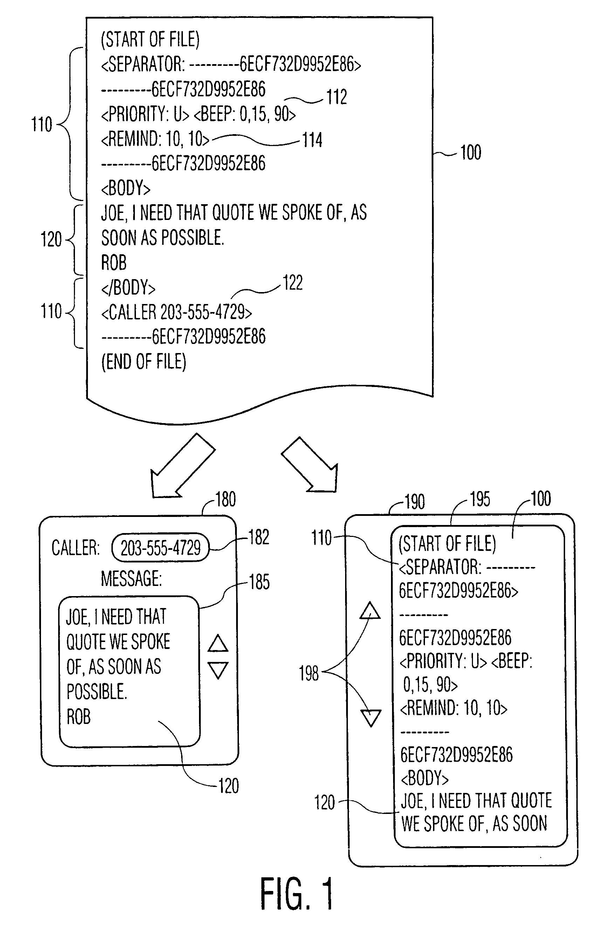

FIG. 1 illustrates an example prior art encoding 100 of a text message 120 with delivery-control information 110. Consistent with prior art systems, the originator of the message 120 may have created the message via a voice or text input to a message processing system (not shown), followed by a selection of options for controlling the delivery of the message 120. For example, as illustrated by the "Beep: 0,15,90" control 112, the user has selected the option of beeping the recipient immediately (0), then every 15 seconds thereafter, and to terminate the beeping after 90 seconds. Similarly, the "Remind: 10,10" command reminds the recipient that the message has not been responded to, after 10 minutes, and every 10 minutes thereafter. The message processing system typically creates the commands 110 based on knowledge of the receiving device 180 of the recipient. The corresponding receiving device 180, which comprises, for example, a beeper (pager) or telephone with a text display, a PDA, PC, or other display device, processes the commands, and displays the contents of the message 120 on a display device 185. The corresponding device 180 also recognizes embedded commands, such as the "Caller" command 122 ("caller-ID"), and provides the caller's telephone number in a separate display window 182. The compatibility of the commands 110 in the encoded message 100 to the particular receiving device 180 is typically effected via a conformance with an agreed upon standard, such as MIME, HTML, XML, and so on, by the message service provider and the receiving device 180.

Consider, however, the receipt of an encoded message or document 100 by a receiving device 190 that is not compatible with the particular standard used by the message service provider. Although the commands 110 may be encoded as ASCII characters, the receiving device 190 is not configured to distinguish the command-information 110 from the message-content 120. As illustrated, the non-compatible device 190 displays the received encoded message 100 in its entirety. Each of the commands 110 are displayed on the display screen 195 of the device 190, followed by the contents of the message 120 and any remaining commands 110. Although the user of the device 190 is provided a means 198 for scrolling through the message 100 for the content-material 120, the display of the commands 110 amidst the content-material 120 presents a cluttered view on the screen 195 that is visually unappealing. To a user who is not familiar with the form of encoding of electronic messages, the information presented on the screen 195 may be so alien as to preclude recognition of the contents of the message 120. In like manner, if the control information is encoded in a non-ASCII, or "binary", format and received by a receiving device that is not compatible with this encoding, unpredictable rendering effects are likely to occur that also produce visually unappealing results.

European patent application EP-A-0 263 253 discloses a solution for the problem of how to transmit text messages longer than 64 characters using the RDS system that imposes this leagth limit to text messages. The problem is solved by splitting the complete text message into portions no longer than 60 characters, and to prefix each portion with four characters chosen from columns 0 and 1 of the ISO 646 code-table, containing "non-printable" characters. As described in col. 3 lines 30-49 of EP-A-0 263 253, the prefixes identify the portions belonging to one complete text message.

### BRIEF SUMMARY OF THE INVENTION

It is an object of this invention to provide a method for encoding a message that contains content-material and delivery-control information that provides for a clear view of the content material substantially independent of the device receiving the message. It is a further object of this invention to provide a device for encoding a message so that its content can be viewed easily by a large number of receiving devices. It is a further object of this invention to provide a receiving device that processes the content-material and delivery-control information that is encoded using the principles of this invention. It is a further object of this invention to provide an encoded message that contains content-material and delivery-control information that is encoded using the principles of this invention.

It is a further object of this invention to encode delivery-control information that provides an audible, visual and/or tactile notification special effect.

The invention is defined by the independent claims 1, 4, 7, 10, 11 and 12.

Further detailed embodiments of the invention are defined in the dependent claims.

Namely, the control information is encoded using "invisible" characters or sequences or groups thereof, which, when rendered using conventional means for rendering the content-material, produce an effect that is substantially indiscernible to the user.

Said control information provides an audible, visual and/or tactile notification special effect in the recipient device.

### BRIEF DESCRIPTION OF THE DRAWINGS

The invention is explained in further detail, and by way of example, with reference to the accompanying drawings wherein:
FIG. 1 illustrates an example prior-art encoding and rendering of a message that contains content-material and associated delivery-control information.
FIG. 2 illustrates an example encoding and rendering of a message that contains content-material and associated delivery-control information in accordance with one aspect of this invention.
FIGs. 3A-3C illustrate an example invisible encoding of control information in accordance with another aspect of this invention.
FIG. 4 illustrates an example block diagram of an encoder for encoding a message in accordance with this invention.
FIG. 5 illustrates an example flow diagram for encoding a message in accordance with this invention.
FIG. 6 illustrates an example block diagram of a decoder for decoding a message that is encoded in accordance with this invention.

Throughout the drawings, same reference numerals indicate similar or corresponding features or functions.

### DETAILED DESCRIPTION OF THE INVENTION

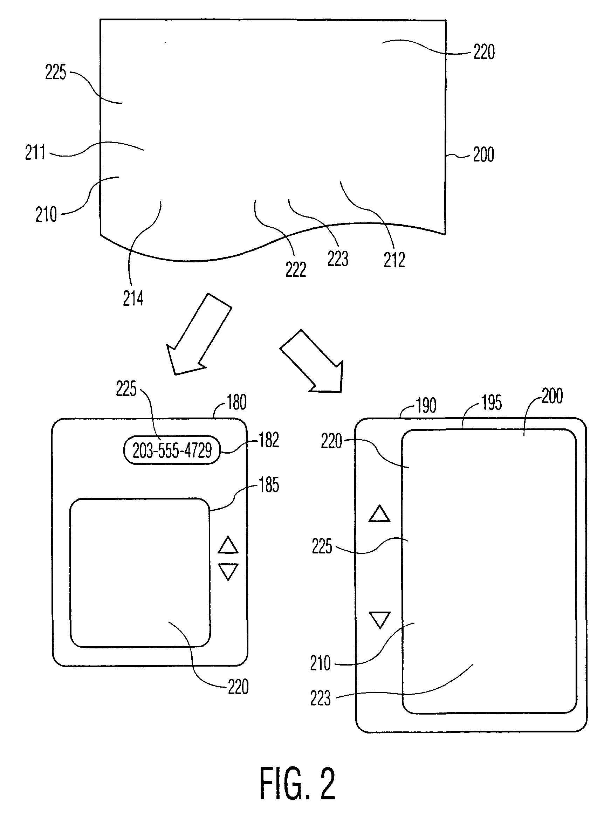

FIG. 2 illustrates an example of an encoding 200 of a message in accordance with one aspect of this invention. The example encoding 200 corresponds to encoded message 100 of FIG. 1. As illustrated, the encoded message 200 includes content-material 220, and a control section 210. The content-material 220 is an extraction, or clustering, of the textual content of the document 100, without, for example, the above described embedded commands 110 that affect the delivery of the message 100. That is, all the letters, numbers, symbols, punctuation, and the like that constitute the message content 120 are encoded directly, preferably in a "plain-text" form that can be displayed on an "unintelligent" display device.

The control section 210 contains the control information 212, 214, 222 that is used to effect one or more options associated with the delivery of the message. For the purposes of this application, the term "delivery" is used in the general sense, and includes actions effected by the receiving device in response to a receipt of the electronic document, comprising an electronic message in this example, as well as actions effected by intermediary devices in the communication of the message to the receiving device. For example, an "urgent" command may cause the service provider to interrupt an existing communication to the receiving device, and subsequent cause an audio or visual effect at the receiving device. In like manner, a "low-priority" command in the message may place the message in storage at a mailbox associated with the intended recipient, and produce no special effects on the receiving device. Other delivery effects, such as the rendering of an audio-visual prelude, sound effects, automated prompts, and so on, may also be provided by the control section 210. For ease of understanding, the control section 210 does not include other encodings that can be included to affect, for example, the appearance of the content-material 220.

The example control items 212, 214, 222 correspond to the conventional control items 112, 114, 122 of the example message 100 of FIG. 1. The control section 210 is delineated from the content-material 220 by the "{Control:" delimiter 211. A receiving device that is compatible with the format of the encoded message 200 recognizes this predefined delimiter, and thereafter interprets the subsequent information as delivery-control information. The particular choice of characters for the delimiter 211, "{Control:" is presented here for illustrative purposes only. In a preferred embodiment, a sequence of characters is selected that is highly likely to be unique; that is, a sequence that has a high likelihood of not coincidently appearing within the material-content 220, for example "qx73gh#$6^2". Alternatively, the control section delimiter can be deduced from the content of the encoded message 200. For example, the receiving device 180 may process the encoded message 200 from the end toward the beginning, noting the occurrences of identifiable control items. The beginning of the control segment 210 is identified by the first absence of an identifiable control item. These and other techniques for delineating distinguishable segments of information, or clusters, are common to one of ordinary skill in the art.
The control segment 210 may contain references to the content-material 220. The control item "Caller:" 222, for example is used to identify the originator's telephone number. The associated information, the originator's telephone number, should be displayed on a conventional display device in this example, and is therefore included 225 in the content-material 220. In a preferred embodiment of this invention, a location identifier 223 that identifies a location in the content-material 220 is contained within the control item 222. In this example, the location identifier 223 is the line number "4" at which the associated telephone number 225 appears in the content-material 220. Other location identifiers, such as column and row coordinates, may also be used. By providing for a location parameter within a control item, information that is applicable to both content and control can be encoded without a redundant inclusion of the same information in both the content-material 220 and control segment 210. It also allows for the removal of the referenced item from the display of the message-content, as appropriate for the particular control item. For example, the illustrated receiving device 180 that is compatible with the example format of the message 200 has a separate viewing area 182 for the caller's telephone number. This example compatible device 180 removes the telephone number 225 from the display of the message 220 in the message viewing area 185, and places it in the caller viewing area 182. An other compatible device (not shown) that does not have a separate viewing area 182 for the caller's telephone number would not remove the telephone number 225 from the display of the message 220. These and other display techniques that provide for enhanced usability or product differentiation will be evident to one of ordinary skill in the art in view of this invention.

As illustrated in FIG. 2, a receiving device 180 that is compatible with the format used in the example message 200 presents the content-material 220, with modifications as appropriate to particular delivery-commands 210, for unobstructed viewing by a user. In accordance with an embodiment falling outside the scope of the claims, a receiving device 190 that is not compatible with the format used in the example message 200 also presents the content-material 220 for unobstructed viewing by a user. As illustrated, although the control information 210 is visible in the viewing area 195, its segregation from the content-material 220, and its subordinate placement, following the content-material 220, allows for an unobstructed viewing of the content-material 220. In this manner, the encoding of a message provides for a clear view of the content-material substantially independent of the device receiving the message. Thereby, the content-material can be viewed easily by a large number of receiving devices. The clear segregation of the delivery-control information from the content information provides an ergonomic manner for presenting electronic documents, especially electronic messages.

The receiving device 180 that is compatible with the format used in the example message 200 effects the appropriate actions, or inactions, as indicated by each control item in the control segment 210. For example, in response to the "Beep: 0,15,90" command 212, the compatible device 180 effects an audible tone or tactile vibration when the message is first received (at time "0"), then every 15 seconds thereafter, and ceases the effect after 90 seconds. Other command items in the control segment 210 are similarly processed, based on the definition of each command item corresponding to the selected format for encoding messages.

In accordance with this invention, the control information is encoded using "invisible" character codes, or "invisible" sequences or other groupings of character codes. That is, the control information 210 is encoded such that a direct display of the encoded message 200 will not produce a visible effect for information other than the content-information. That is, the control information 210 is encoded into a group of characters that are invisible when rendered, and thus, the rendering of the encoded message 200 will only produce a visible effect corresponding to the content-material. For the purposes of this invention, a blank space is considered an "invisible" character, even though it produces a "white" space upon display. In like manner, blank lines are included in the definition of "invisible".

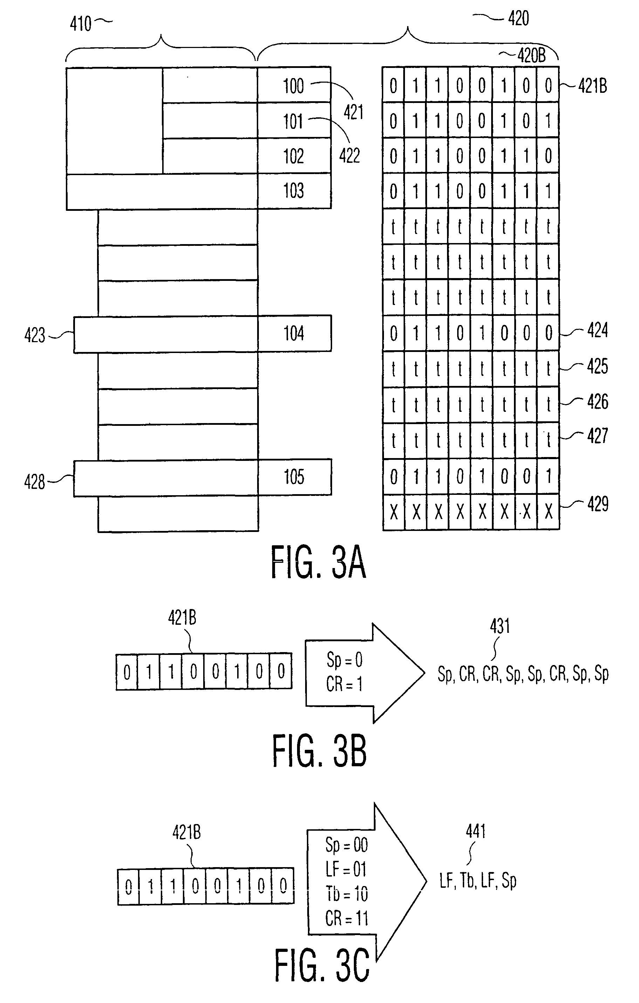

FIGs. 3A-3C illustrate examples of a creation of invisible sequences corresponding to the example control items in the encoded message 200. Illustrated in FIG. 3A, each type of control item 410 is uniquely defined by an identifier 420. The identifier 420 is illustrated in both decimal and binary 420B form. The definition of each control identifier 420 can be predefined, or the mapping of unique identifiers to control items can be defined for each encoded message. For ease of understanding, the mapping of control items to control identifiers is assumed herein as being predefined, alternative data mapping techniques being common in the art. As illustrated in FIG. 3A, a "Priority - Low" control item has an identifier of "100" 421, a "Priority - Routine" control item has an identifier of "101" 422, and so on. Common in the art, some control items have associated parameters. For example, a "Beep" control item 423 has an identifier of "104" (binary "01101000") 424, and this identifier is followed by parameters that define the start time 425, increment time 426, and end time 427 corresponding to the originator's selection of how often the "beep" notification is to occur. In like manner, the "Caller" control item 428 is followed by an encoding of an associated line number 429, or other location identifier, within the message-content. To distinguish the control items 421, 422, etc. from an encoding of the parameters used, for example, in the "Beep" command 210 of the encoded message 200, any one of a variety of common techniques may be employed. For example, a recognition of the particular control item can be used to distinguish the occurrence of parameters, or, such parameters may be encoded between specific distinguishing delimiters, such as an "escape" character, and so on.

The binary representation 420B of the value of each control identifier 420 is illustrated in FIG. 3A. In accordance with one example embodiment of this invention, an invisible sequence is created for each control item by encoding the sequence of binary (0-1) values in the binary representation 420B as a sequence of invisible characters. Illustrated in FIG. 3B, for example, a "space" (Sp) is used to represent a logic "0", while a "carriage return" (CR) is used to represent a logic "1". Using this representation, the example binary encoding 421 B of a "Priority - Low" control item, 01100100, is encoded as the sequence: Sp-CR-CR-Sp-Sp-CR-Sp-Sp 431. In like manner, the binary representation of any parameter associated with each control item is similarly encoded. By using "invisible" characters to encode the control items and associated parameters, a direct display of the encoded control information will merely produce blank spaces and blank lines at the end of the content-material 220.

Alternative encoding for producing groups of characters corresponding to the control information that are invisible when rendered will be evident to one of ordinary skill in the art. Illustrated in FIG. 3C, for example, is an encoding that uses four "invisible" characters to represent pairs of binary digits: a "space" (SP) represents a 00 pair, a "line feed" (LF) represents a 01 pair, a "tab" (Tb) represents 10, and a "carriage return" (CR) represents 11. Using this representation, the 01100100 421 B representation of a "Priority - Low" control item is encoded as the sequence: LF-Tb-LF-Sp 441. The above referenced copending U.S. patent application "Invisible Encoding of Attribute Data in Character Based Documents and Files", presents alternative means for invisibly encoding data, including the use of "backspace" characters that have the effect of "erasing" the encoded data. For example, using this alternative technique, each "visible" control item 211, 212, etc. of segment 210 in FIG. 2 can be followed by a number of backspace characters corresponding to the length of the visible control items 211, 212, etc. In this manner, the direct display of a visible sequence of characters followed by a sequence of an equal number of backspaces will not be "visible", and will not produce "white space" on the display. That is, the conventional "cursor placement" pointer will be advanced after producing the visible characters, then decremented for each backspace, resulting in an effective stationary cursor placement pointer. In a printing device, the print head may produce a series of overstrikes as the print head advances to produce the characters, then regresses to effect the backspaces, then advances to produce the characters of the next control item, then regresses to effect the backspaces, and so on. In some applications, the printing and overstriking of a few characters at the end of a text message may be preferable to the printing of blank spaces and lines at the end of the text message. Otherwise, the encoding presented with respect to FIG. 3 that uses all invisible characters would be preferred. In like manner, some legacy devices do not "process" backspace characters, displaying instead a symbol representing the backspace character. Although for the purposes of this invention each of these alternatives are included in the definition of characters that are invisible when rendered, if maximum compatibility with legacy devices is desired, the encoding presented with respect to FIG. 3 is preferred.

A display application that is compatible with this format will process the data in the formatted file as text until it encounters the control section delimiter 211. Thereafter it will process each control item, ignoring the backspace characters, and appropriately effecting the delivery options associated with the message in accordance with the function of each control item.

Each control item of FIG. 1 may be appended with a corresponding number of backspace characters, thereby effectively "erasing" the control items when viewed on a conventional display device. Such an encoding of the control item within the body of the content-material is termed an "in-line" format encoding to provide a group of characters that are invisible when rendered.

To provide compatibility with existing message delivery services, the aforementioned clustering of the content-material and encoding of the control information can be effected as a post-process to a conventional message creation process.

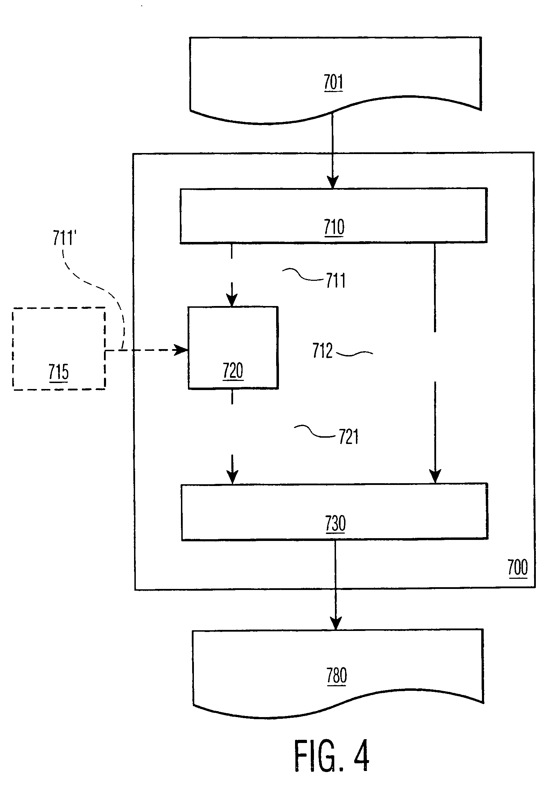

FIG. 4 illustrates an example block diagram of an encoder 700 that processes a conventional message 701 to produce an encoded file 780. The encoded message 780 may be any one of a variety of forms, such as a computer file, a transmitted sequence of characters or symbols, a block of memory, and so on. The encoder 700 includes a parser 710, a control encoder 720, and a file organizer and writer 730. The parser 710 distinguishes content-material 712 in the message 701 from control items 711. The content-material 712 is communicated to the file organizer and writer 730, and control items 711 are communicated to the control encoder 720. Illustrated in FIG. 4 is an option selector 715 that may also be used to provide control items 711', based, for example, on the originator's input at the time of the encoding of the content-material 712. If control identifiers are utilized, as in FIG. 3, the control encoder 720 encodes the control item into a control identifier, if it is not already thusly encoded. As the invisible-sequence feature of this invention is being employed, the control encoder 720 also encodes the control item into an invisible sequence, using, for example, the encodings presented above with regard to FIGs. 3B or 3C. The encoded control sequence 721 is communicated to the file organizer and writer 730. If in-line encoding is not being employed, the location of items in the content-material 712 that are associated with each control item 711 is also communicated as an encoded parameter, also using the techniques discussed above.

The file organizer and writer 730 prepares the content 712 and control 721 information for storage or transmission as an encoded file 780. The term file is used in a general sense herein, meaning a composite sequence of data. It includes, for example, a file on a computer system, a sequence of bytes in memory, a sequence of bytes or packets that are communicated over a data network, and so on. If an in-line encoding of invisible sequences is being employed, the file organizer and writer 730 merely writes the content-material 712 and encoded script sequences 721 to the encoded file 780 in the order in which they appear in the message 701. If in-line encoding is not being employed, the content-material 712 is written directly to the encoded file 780, followed by each of the encoded control sequences 721, as discussed with regard to FIG. 2.

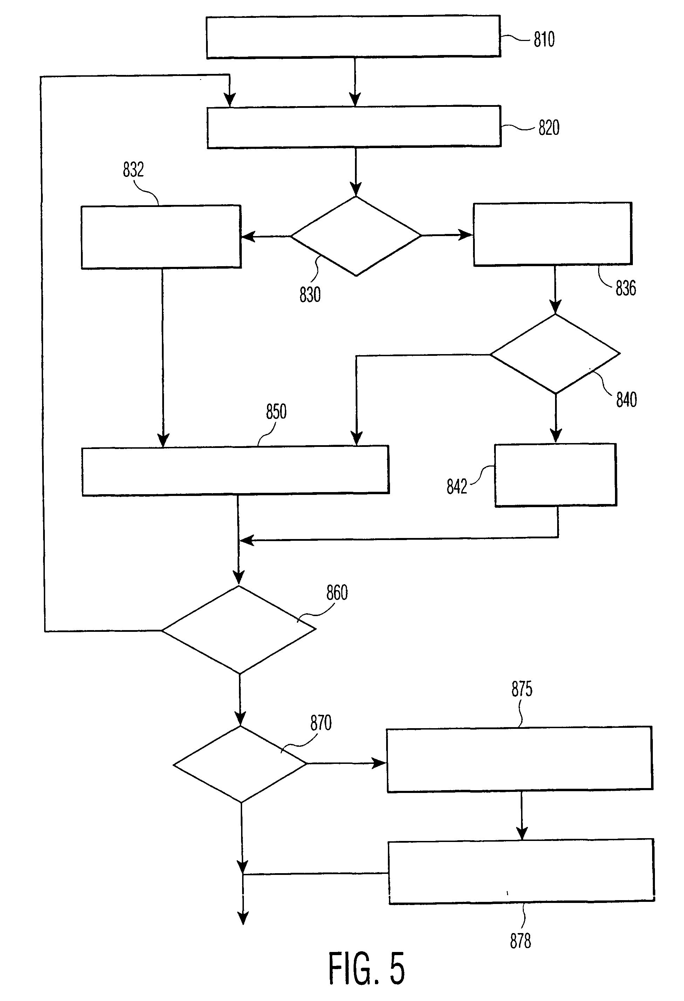

FIG. 5 illustrates an example flow diagram for encoding a message in accordance with the various aspects of this invention. At 810 the input message is opened for processing. The block 820 parses the input message for content-material and control items.

If, at 830, the next part or element in the input message is a control item, the corresponding control sequence is determined, at 836. If in-line encoding is not being employed, the block 836 also includes the determination of the location coordinate for this control item, if any. If the invisible encoding aspect of this invention is being utilized, the block 836 converts the control item and associated coordinates and other parameters into an invisible sequence.

If, at 840, in-line encoding is not being employed, the encoded control sequence is temporarily stored for subsequent appending to the end of the content-material of the output file, at 878. If, at 840, in-line encoding is being employed, the invisible sequence corresponding to the control item is communicated to the block 850 for writing to the output file in the order in which it appears in the input message.

If, at 830, the next element in the input message is not a control item, the corresponding message-content sequence is determined, at 832, and communicated to the block 850 for writing to the output file. Typically, block 832 merely communicates the content-material directly to block 850 for writing to the output file, but if any reformatting of the content-material of the input message is required, such as a conversion into ASCII character codes, it is performed at this block 832.

After the sequence corresponding to the element in the input message is written to the output file, at 850, or stored for subsequent use, at 842, the system loops back, via 860 to 820, to parse the next element, and this process is continued until the end of the input message.

If, at 870, the in-line formatting has not been used, a delimiter marking the start of the control section is written to the output file, at 875, and each of the stored control sequences, with its corresponding parameters, if any, is written to the output file, at 878. As noted above, because these sequences are placed in the output file after all of the content-material, the direct display of the output file will result in a rendering of the content-material of the input message in an easy to read format. That is, if the output file is rendered for display by an application that is not "compatible" with the encoded format discussed herein, the initial section of the output file will still be rendered as a text document, with no intervening visually-disturbing control items.

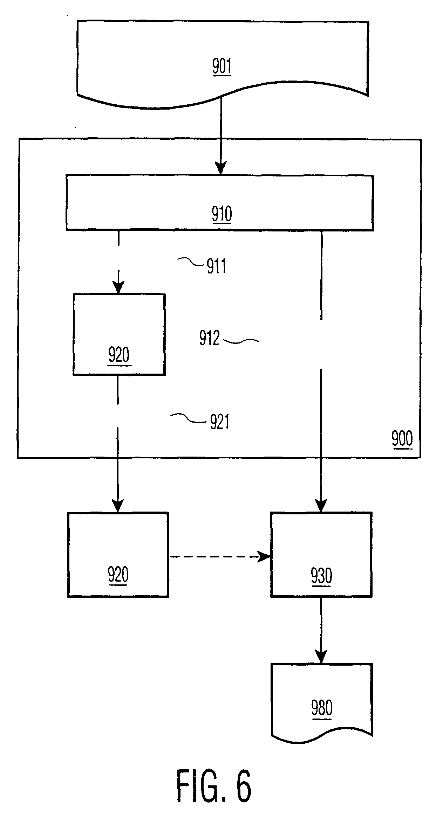

FIG. 6 illustrates an example block diagram of a compatible decoder 900 that operates in accordance with the various aspects of this invention. The decoder 900 processes an encoded file 901 to produce the content-material 912 and control items 921 corresponding to the input document that was used to produce the encoded file 901. The decoder 900 includes a parser 910 and a control decoder 920.

The parser 910 delineates the content-material from the encoded control sequences. If an in-line encoding of control sequences is employed, the parser 910 includes a control recognition system that recognizes each encoded control item 911 as it occurs in the encoded file 901; otherwise, the parser 910 includes a control section delimiter recognizer that serves to identify the end of content-material 912 and the start of control items 911. As noted above, techniques for distinguishing sections of files, or types of information data, are common in the art. The content-material 912 is provided directly to a display driver 930, or other rendering device, such as a printer. As previously noted, the encoded file 901 may be a computer file, a sequence of bytes in a computer memory, a sequence of packets on a communications medium, and so on. In like manner, the terms display 980 and display driver 930 are used in a general sense to include conventional computer displays and printers, and will be recognized by one of ordinary skill in the art as including intermediate display means such as files, web pages, applets, wavelets, cookies, and so on that contain information for producing a rendering via rendering applications such as web browsers and other viewing means.

The encoded control sequences 911 are decoded by the control decoder 920, and provided to a conventional control processor 920 to provide the corresponding delivery effects, typically via the display driver 930. As discussed above, the delivery effects may be a notification that the content-material 912 has arrived, reminders in the future that the content-material 912 has not yet been acted upon, additional renderings of prerecorded material, and so on.

The foregoing merely illustrates the principles of the invention. It will thus be appreciated that those skilled in the art will be able to devise various arrangements which, although not explicitly described or shown herein, embody the principles of the invention and are thus within its scope. For example, the encoded control sequences have been presented as being placed at the end of the content-material of the encoded output file, similar to "end-notes" in a document. Alternatively, the encoded control sequences may be placed at the end of each text page or section, similar to "foot-notes", or "chapter-notes" in a document. In like manner, the encoded control sequences could be placed in the margins of a document, in the space between paragraphs, and so on. Similarly, the control code can be formatted in an arrangement other than an ordered linear format. For example, the delivery control code has invisible characters in predefined places within a page of content information so that both position and character type can be used in combination for the encoding. The particular structure and sequences provided in this disclosure are intended for illustrative purposes. For example, the content-material may include audio content, a still picture or video content that is rendered, for example, in addition to text that is displayed on the display device 180, 190, 980. In this embodiment, the control information may also include control items that affect the renderings of this non-text material.

Additionally to the claimed invention, other applications of the principles presented in this specification are feasible. For example, the ability to present alternative forms of information in dependence upon whether the receiving application is compatible with the encoding format can also be used to provide a level of security from eavesdroppers. Information that is to remain private can be delivered via the invisible control sequences, and the user is provided an option on the receiving device 180 for displaying or hiding this private information. In this manner, confidential information can be hidden from view when the user is in an environment with a high likelihood of someone else viewing this material at the same time. The features and enhancements that can be provided are limited only by the capabilities of the underlying message receiving system used.

The structure and functions contained in the figures are presented for illustration purposes. Various arrangements may also be utilized for improving the performance of the example systems. For example, the parser 910 may be designed with multiple ports to the encoded file 901, one port accessing the beginning of the content-material 220, and the other accessing the beginning of the control section 210, thereby providing a parallel processing of the encoded file 901. In like manner, the encoding and decoding tasks may be embodied within conventional devices, such as delivery tools for processing MIME, HTML, JAVA, XML, and other encodings.

## Claims

1. A method of enabling an encoding of an electronic document (701), **characterized in that** the electronic document (701) comprises content information (712) and delivery-control information (711) that controls delivery of the electronic document to a recipient by providing an audible, visual and/or tactile notification special effect at the receiving device in response to the receipt of the electronic document, the method comprising:
enabling an encoding (836) of the delivery-control information (711) into a group of control characters (721) that, when rendered using conventional means for rendering the content-material, produce an effect that is substantially indiscernible to the user.

2. The method of claim 1, **characterized in that** the group of control characters (721) includes character codes (431) that correspond to a binary representation (421B) of the delivery-control information (711), each character code of the character codes producing an effect that is substantially indiscernible to the user when the electronic document (701) is rendered using conventional means for rendering the content-material.

3. The method of claim 1, **characterized in** further comprising:
enabling a formation (840) of a cluster (220) comprising the content information (712),
enabling a determination of a location (223) in the cluster (220) that is associated with the delivery-control information (711),
enabling an inclusion of the location (223) into the group of control characters (721) that produce an effect that is substantially indiscernible to the user when the electronic document (701) is rendered using conventional means for rendering the content-material.

4. A method of enabling a delivery of an electronic document (701) via a data network, **characterized in that** the electronic document (701) comprises content information (712) and delivery-control information (711) that controls delivery of the electronic document (701) to a recipient by providing an audible, visual and/or tactile notification specical effect at the receiving device in response to the receipt of the electronic document, the method comprising:
enabling an encoding (836) of the delivery-control information (711) into a group of control characters (721) that, when rendered using conventional means for rendering the content-material, produce an effect that is substantially indiscernible to the user, and
enabling a transmission of the content information (712) and the group of control characters (721) via the data network.

5. The method of claim 4, **characterized in that** the group of control characters (721) includes character codes (431) that correspond to a binary representation (421B) of the delivery-control information (711), each character code of the character codes producing an effect that is substantially indiscernible to the user when the electronic document (701) is rendered using conventional means for rendering the content-material.

6. The method of claim 4, **characterized in** further comprising:
enabling a formation (840) of a cluster (220) comprising the content information (712),
enabling a determination of a location (223) in the cluster (220) that is associated with the delivery-control information (711),
enabling an inclusion of the location (223) into the group of control characters (721) that produce an effect that is substantially indiscernible to the user when the electronic document (701) is rendered using conventional means for rendering the content-material.

7. An encoder (700) for encoding an electronic document (701), **characterized in that** the electronic document (701) comprises content information (712) and delivery-control information (711) that facilitates a delivery of the content information (712) to a recipient by providing an audible, visual and/or tactile notification special effect at the receiving device in response to the receipt of the electronic document, the encoder (700) comprising:
a control encoder (720) that is configured to encode the delivery-control information (711) into a group of control characters (721) that, when rendered using conventional means for rendering the content-material produce an effect that is substantially indiscernible to the user.

8. The encoder of claim 7, **characterized in** further including:
a control extractor that is configured to determine a location (223) in the content information (712) that is associated with the delivery-control information (711), and
the control encoder (720) is further configured to include the location (223) into the group of control characters (721),
thereby facilitating a clustering of the content information (712) separate from the delivery-control information (711).

9. The encoder of claim 7, **characterized in that** the group of control characters (721) includes character codes (431) that correspond to a binary representation (421B) of the delivery-control information (711), each character code of the character codes producing an effect that is substantially indiscernible to the user when the electronic document (701) is rendered using conventional means for rendering the content-material.

10. A method of enabling a processing of an electronic document (901), **characterized in that** the electronic document (901) comprises content information (912) and control information (921) for providing an audible, visual and/or tactile notification special effect at the receiving device in response to the receipt of the electronic document, the control information (921) comprising a group of control characters (911) that, when rendered using conventional means for rendering the content-material, produce an effect that is substantially indiscemible to the user, the method comprising:
enabling a parsing (910) of the electronic document (901) to provide the group of control characters (911),
enabling a decoding (920) of the group of control characters (911) to provide the control information (921), and
enabling a control (920) of delivery of the content information (912) that is based on the control information (921) by providing an audible, visual and/or tactile notification special effect at the receiving device in response to the receipt of the electronic document.

11. A decoder (900) for decoding an electronic document (901), **characterized in** the electronic document (901) comprising content information (912) and delivery-control information (921) for providing an audible, visual and/or tactile notification special effect at the receiving device in response to the receipt of the electronic document, the delivery-control information (921) comprising a group of control characters (911) that produce an effect that is substantially indiscernible to the user when the electronic document (901) is rendered using conventional means for rendering the content information, the decoder comprising:
a control decoder (920) that is configured to decode the group of control characters (911) to provide the delivery-control information (921), and
a delivery device (920) that is configured to deliver the content information (912) in dependence upon the delivery-control information (921) by providing an audible, visual and/or tactile notification special effect.

12. An electronic document (780), **characterized in** the electronic document (780) having content information (712) for rendering and delivery-control information (711) for control of delivery to a recipient by providing an audible, visual and/or tactile notification special effect at the receiving device in response to the receipt of the electronic document, the electronic document (780) comprising:
the content information (712), and
delivery-control information (711) encoded into a group of control characters (721) that produce an effect that is substantially indiscernible to the user when the electronic document (780) is rendered using conventional means for rendering the content information.

13. The document (780) of claim 12, **characterized in that** the control characters (721) functionally comprise at least one of the following: a carriage return, a tab, a space-bar space, and a line feed.

## Patentansprüche

1. Verfahren zum Ermöglichen einer Codierung eines elektronischen Dokumentes (701), **dadurch gekennzeichnet, dass** das elektronische Dokument (701) Contentinformation (712) und Abgabesteuerinformation (711) enthält, welche die Abgabe des elektronischen Dokumentes zu einem Empfänger **dadurch** steuert, dass ein hörbarer, sichtbarer und/oder fühlbarer Ankündigungs-Spezialeffekt in der empfangenden Einrichtung vorgesehen wird, und zwar in Reaktion auf den Empfang des elektronischen Dokumentes, wobei das Verfahren die nachfolgenden Verfahrensschritte umfasst:
- das Ermöglichen einer Codierung (836) der Abgabesteuerungsinformation (711) in eine Gruppe von Steuerzeichen (721), die, wenn aufbereitet unter Verwendung herkömmlicher Mittel zum Aufbereiten des Contentmaterials, einen Effekt erzeugen, der für den Benutzer im Wesentlichen nicht wahrnehmbar ist.

2. Verfahren nach Anspruch 1, **dadurch gekennzeichnet, dass** die Gruppe mit Steuerzeichen (721) Zeichencodes (431) aufweist, die einer binären Darstellung (421B) der Abgabesteuerungsinformation (711) entsprechen, wobei jeder Zeichencode der Zeichencodes einen Effekt erzeugen, der für den Benutzer im Wesentlichen nicht wahrnehmbar ist, wenn das elektronische Dokument (701) unter Verwendung herkömmlicher Mittel zum Aufbereiten des Contentmaterials aufbereitet wird.

3. Verfahren nach Anspruch 1, **dadurch gekennzeichnet, dass** es weiterhin die nachfolgenden Verfahrensschritte umfasst:
- das Ermöglichen einer Bildung (840) eines Clusters (220) mit der Contentinformation (712),
- das Ermöglichen einer Ermittlung einer Stelle (223) in dem Cluster (220), die mit der Abgabesteuerungsinformation (711) assoziiert ist,
- das Ermöglichen einer Einschließung der Stelle (223) in die Gruppe von Steuerzeichen (721), die einen Effekt erzeugen, der für den Benutzer im Wesentlichen nicht wahrnehmbar ist, wenn das elektronische Dokument (701) unter Verwendung herkömmlicher Mittel zum Aufbereiten des Contentmaterials aufbereitet wird.

4. Verfahren zum Ermöglichen einer Abgabe eines elektronischen Dokumentes (701) über ein Datennetzwerk, **dadurch gekennzeichnet, dass** das elektronische Dokument (701) Contentinformation (712) und Abgabesteuerungsinformation (711) enthält, welche die Abgabe des elektronischen Dokumentes (701) zu einem Empfänger steuert, indem ein hörbarer, sichtbarer und/oder fühlbarer Ankündigungs-Spezialeffekt in der empfangenden Einrichtung vorgesehen wird, und zwar in Reaktion auf den Empfang des elektronischen Dokumentes, wobei das Verfahren die nachfolgenden Verfahrensschritte umfasst:
- das Ermöglichen einer Codierung (836) der Abgabesteuerungsinformation (711) in eine Gruppe von Steuerzeichen (721), die, wenn aufbereitet unter Verwendung herkömmlicher Mittel zum Aufbereiten des Contentmaterials, einen Effekt erzeugen, der für den Benutzer im Wesentlichen nicht wahrnehmbar ist, und
- das Ermöglichen einer Übertragung der Contentinformation (712) und der Gruppe mit Steuerzeichen (721) über das Datennetzwerk.

5. Verfahren nach Anspruch 4, **dadurch gekennzeichnet, dass** die Gruppe mit Steuerzeichen (721) Zeichencodes (431) enthält, die einer binären Darstellung (412B) der Abgabesteuerinformation (711) entsprechen, wobei jeder Zeichencode der Zeichencodes einen Effekt erzeugt, der für den Benutzer im Wesentlichen nicht wahrnehmbar ist, wenn das elektronische Dokument (701) unter Verwendung herkömmlicher Mittel zum Aufbereiten des Contentmaterials aufbereitet wird.

6. Verfahren nach Anspruch 4, **dadurch gekennzeichnet, dass** das Verfahren weiterhin die nachfolgenden Verfahrensschritte umfasst:
- das Ermöglichen einer Bildung (840) eines Clusters (220) mit der Contentinformation (712),
- das Ermöglichen einer Ermittlung einer Stelle (223) in dem Cluster (220), die mit der Abgabesteuerinformation (711) assoziiert ist,
- das Ermöglichen einer Einschließung der Stelle (223) in die Gruppe von Steuerzeichen (721), die einen Effekt erzeugen, der für den Benutzer im Wesentlichen nicht wahrnehmbar ist, wenn das elektronische Dokument (701) unter Verwendung herkömmlicher Mittel zum Aufbereiten des Contentmaterials aufbereitet wird.

7. Codierer (700) zum Codieren eines elektronischen Dokumentes (701), **dadurch gekennzeichnet, dass** das elektronische Dokument (701) Contentinformation (712) und Steuerinformation (711) enthält, die eine Abgabe der Contentinformation (712) zu einem Empfänger **dadurch** ermöglicht, dass ein hörbarer, sichtbarer und/oder fühlbarer Ankündigungs-Spezialeffekt in der empfangenden Einrichtung vorgesehen wird, und zwar in Reaktion auf den Empfang des elektronischen Dokumentes, wobei der Codierer (700) weiterhin die nachfolgenden Elemente umfasst:
- einen Steuercodierer (720), der dazu vorgesehen ist, die Abgabesteuerinformation (711) in eine Gruppe von Steuerzeichen (721) zu codieren, die, wenn unter Verwendung herkömmlicher Mittel zum Aufbereiten des Contentmaterials aufbereitet, einen Effekt erzeugen, der für den Benutzer im Wesentlichen nicht wahrnehmbar ist.

8. Codierer nach Anspruch 7, **dadurch gekennzeichnet, dass** er weiterhin die nachfolgenden Elemente umfasst:
- einen Steuerungsextrahierer, der vorgesehen ist um eine Stelle (223) in der Contentinformation (712) zu ermitteln, die mit der Abgabesteuerinformation (711) assoziiert ist, und
- den Steuercodierer (720), der weiterhin dazu vorgesehen ist, die Stelle (223) in die Gruppe von Steuerzeichen (721) einzuschließen,
- wodurch eine Clusterung der Contentinformation (712) ermöglicht wird, und zwar separat von der Abgabesteuerinformation (711).

9. Codierer nach Anspruch 7, **dadurch gekennzeichnet, dass** die Gruppe von Steuerzeichen (721) Zeichencodes (431) enthält, die einer binären Darstellung (421B) der Abgabesteuerinformation (711) entsprechen, wobei jeder Zeichencode der Zeichencodes einen Effekt erzeugt, der für den Benutzer im Wesentlichen nicht wahrnehmbar ist, wenn das elektronische Dokument (701) unter Verwendung herkömmlicher Mittel zum Aufbereiten des Contentmaterials aufbereitet wird.

10. Verfahren zum Ermöglichen einer Verarbeitung eines elektronischen Dokumentes (901), **dadurch gekennzeichnet, dass** das elektronische Dokument (901) Contentinformation (912) und Steuerinformation (921) enthält zum Schaffen eines hörbaren, sichtbaren und/oder fühlbaren Ankündigungs-Spezialeffektes in der empfangenden Einrichtung, und zwar in Reaktion auf den Empfang des elektronischen Dokumentes, wobei die Steuerinformation (921) eine Gruppe von Steuerzeichen (911) aufweist, die, wenn unter Verwendung herkömmlicher Mittel zum Aufbereiten des Steuermaterials, aufbereitet, einen Effekt erzeugen, der für den Benutzer im Wesentlichen nicht wahrnehmbar ist, wobei das Verfahren weiterhin die nachfolgenden Verfahrensschritte umfasst:
- das Ermöglichen einer Syntaxanalyse (910) des elektronischen Elementes (901) zum Liefern der Gruppe mit Steuerzeichen (911),
- das Ermöglichen einer Decodierung (920) der Gruppe mit Steuerzeichen (911), zum Schaffen der Steuerinformation, und
- das Ermöglichen einer Steuerung (920) der Lieferung der Contentinformation (912), auf Basis der Steuerinformation (21) **dadurch**, dass ein hörbarer, sichtbarer und/oder fühlbarer Ankündigungs-Spezialeffekt erzeugt wird.

11. Decoder (900) zum Decodieren eines elektronischen Dokumentes (901), **dadurch gekennzeichnet, dass** das elektronische Element (901) Contentinformation (912) und Abgabesteuerinformation (921) aufweist zum Schaffen eines hörbaren, sichtbaren und/oder fühlbaren Ankündigungs-Spezialeffektes in der empfangenden Einrichtung, und zwar in Reaktion auf den Empfang des elektronischen Dokumentes, wobei die Abgabesteuerinformation (921) eine Gruppe mit Steuerzeichen (911) aufweist, die einen Effekt erzeugen, der für den Benutzer im Wesentlichen nicht wahrnehmbar ist, wenn das elektronische Dokument (901) unter Verwendung herkömmlicher Mittel zum Aufbereiten aufbereitet wird, wobei der Decoder weiterhin Folgendes aufweist:
- einen Steuerdecoder (920), der dazu vorgesehen ist, die Gruppe mit Steuerzeichen (911) zu decodieren zum Schaffen der Abgabesteuerinformation (921), und
- eine Abgabeeinrichtung (920), die dazu vorgesehen ist, die Contentinformation (912) zu liefern, und zwar in Abhängigkeit von der Abgabesteuerinformation (921) **dadurch**, dass ein hörbarer, sichtbarer und/oder fühlbarer Ankündigungs-Spezialeffekt geschaffen wird.

12. Elektronisches Dokument (780), **dadurch gekennzeichnet, dass** das elektronische Dokument (780) Contentinformation (712) enthält zum Aufbereiten und Abgabesteuerinformation (711) zur Steuerung der Abgabe zu einem Empfänger, indem ein hörbarer, sichtbarer und/oder fühlbarer Ankündigungs-Spezialeffekt in der empfangenen Einrichtung geschaffen wird, und zwar in Reaktion auf den Empfang des elektronischen Dokumentes, wobei das elektronische Dokument (780) weiterhin Folgendes umfasst:
- die Contentinformation (712), und
- Abgabesteuerinformation (711), codiert in eine Gruppe von Steuerzeichen (721), die einen Effekt erzeugen, der für den Benutzer im Wesentlichen nicht wahrnehmbar ist, wenn das elektronische Dokument (780) unter Verwendung herkömmlicher Mittel zum Aufbereiten der Contentinformation aufbereitet wird.

13. Dokument (780) nach Anspruch 12, **dadurch gekennzeichnet, dass** die Steuerzeichen (721) funktionell wenigstens eines der nachfolgenden Items enthalten: einen Wagenrücklauf, einen Tabulator, einen Zwischenraum der Zwischenraumtaste und einen Zeilenvorschub.

## Revendications

1. Procédé d'actionnement d'un codage d'un document électronique (701), **caractérisé en ce que** le document électronique (701) comprend une information de contenu (712) et une information de commande du débit (711) qui commande le débit du document électronique à un destinataire en fournissant un effet spécial audible, visuel et/ou tactile de notification au dispositif récepteur en réponse à la réception du document électronique, procédé comprenant :
l'exécution d'un codage (836) de l'information de commande du débit (711) dans un groupe de caractères de commande (721) qui, lors de leur sortie en utilisant des moyens classiques pour la sortie du contenu du message, produisent un effet qui est essentiellement indiscernable pour l'utilisateur.

2. Procédé selon la revendication 1, **caractérisé en ce que** le groupe de caractères de commande (721) comprend des codes de caractères (431) qui correspondent à une représentation binaire (421B) de l'information de commande du débit (711), chaque code de caractère des codes de caractères produisant un effet qui est essentiellement indiscernable pour l'utilisateur lorsque le document électronique (701) est sorti en utilisant des moyens classiques de sortie du contenu du message.

3. Procédé selon la revendication 1, **caractérisé en ce qu'**il comprend par ailleurs :
l'exécution d'une formation (840) d'un groupe (220) composé du contenu du message (712),
l'exécution d'une détermination d'un emplacement (223) dans le groupe (220) qui est associé à l'information de commande du débit (711),
l'exécution d'une inclusion de l'emplacement (223) dans le groupe de caractères de commande (721) qui produit un effet qui est essentiellement indiscernable pour l'utilisateur lorsque le document électronique (701) est sorti en utilisant des moyens classiques pour la sortie du contenu du message.

4. Procédé d'exécution du débit d'un document électronique (701) par le biais d'un réseau de données; **caractérisé en ce que** le document électronique (701) comprend des informations de contenu (712) et des informations de commande du débit (711) qui commandent le débit du document électronique (701) à un destinataire en fournissant un effet spécial audible, visuel et/ou tactile de notification, le procédé comprenant :
l'exécution d'un codage (836) de l'information de commande du débit (711) dans un groupe de caractères de commande (721) qui, lorsqu'ils sont sortis en utilisant des moyens classiques pour la sortie du contenu du message, produisent un effet qui est essentiellement indiscernable pour l'utilisateur et
l'exécution d'une transmission du contenu du message (712) et du groupe de caractères de commande (721) par l'intermédiaire du réseau de données.

5. Procédé selon la revendication 4, **caractérisé en ce que** le groupe de caractères de commande (721) comprend des codes de caractère (431) qui correspondent à une représentation binaire (421B) de l'information de commande du débit (711), chaque code de caractère des codes de caractère produisant un effet qui est essentiellement indiscernable pour l'utilisateur lorsque le document électronique (701) est sorti en utilisant des moyens classiques pour la sortie du contenu du message.

6. Procédé selon la revendication 4, **caractérisé en ce qu'**il comprend par ailleurs :
l'exécution de la formation (840) d'un groupe (220) composé du contenu du message (712),
l'exécution de la détermination d'un emplacement (223) dans le groupe (220) qui est associé à l'information de commande du débit (711),
l'exécution d'une inclusion d'un emplacement (223) dans le groupe de caractères de commande (721) qui produit un effet essentiellement indiscernable pour l'utilisateur lorsque le document électronique (701) est sorti en utilisant des moyens classiques pour la sortie du contenu du message.

7. Codeur (700) pour coder un document électronique (701), **caractérisé en ce que** le document électronique (701) comprend le contenu du message (712) et des informations de commande du débit (711) qui facilitent le débit du contenu du message (712) à un destinataire en fournissant un effet spécial audible, visuel et/ou tactile de notification sur le dispositif récepteur en réponse à la réception du document électronique, le codeur (700) comprenant :
un codeur de commande (720) qui est configuré pour coder l'information de commande du débit (711) dans un groupe de caractères de commande (721) qui, lorsqu'ils sont sortis en utilisant des moyens classiques pour la sortie du contenu du message, produisent un effet qui est essentiellement indiscernable pour l'utilisateur.

8. Codeur selon la revendication 7, **caractérisé en ce qu'**il comprend par ailleurs:
un extracteur de commande qui est configuré pour déterminer un emplacement (223) dans le contenu du message (712) qui est associé à l'information de commande du débit (711) et
le codeur de commande (720) est par ailleurs configuré pour comprendre l'emplacement (223) dans le groupe de caractères de commande (721),
facilitant ainsi un regroupement du contenu du message (712) séparé des informations de commande du débit (711).

9. Codeur selon la revendication 7, **caractérisé en ce que** le groupe de caractères de commande (721) comprend des codes de caractères (431) qui correspondent à une représentation binaire (421B) des informations de commande du débit (711), chaque code de caractère des codes de caractère produisant un effet qui est essentiellement indiscernable pour l'utilisateur lorsque le document électronique (701) est sorti en utilisant des moyens classiques de sortie du contenu du message.

10. Procédé d'exécution d'un traitement d'un document électronique (901), **caractérisé en ce que** le document électronique (901) comprend le contenu du message (912) et des informations de commande (921) pour fournir un effet spécial audible, visuel et/ou tactile de notification, les informations de commande (921) comprenant un groupe de caractères de commande (911) qui, lorsqu'ils sont sortis en utilisant des moyens classiques pour la sortie du contenu du message, produisent un effet essentiellement indiscernable pour l'utilisateur, lequel procédé comprend :
l'exécution d'une analyse syntaxique (910) du document électronique (901) pour fournir un groupe de caractères de commande (911);
l'exécution d'un décodage (920) du groupe de caractères de commande (911) pour fournir des informations de commande (921) et
l'exécution d'une commande (920) de débit du contenu du message (912) qui est basée sur l'information de commande (921) en fournissant un effet spécial audible, visuel et/ou tactile de notification au dispositif récepteur en réponse à la réception du document électronique.

11. Décodeur (900) pour décoder un document électronique (901), **caractérisé en ce que** le document électronique (901) comprenant le contenu du message (912) et des informations de commande du débit (921) pour fournir un effet spécial audible, visuel et/ou tactile de notification au dispositif récepteur en réponse à la réception du document électronique, les informations de commande du débit (921) comprenant un groupe de caractères de commande (911) qui produisent un effet qui est essentiellement indiscernable pour l'utilisateur (901) lorsque le document électronique (901) est sorti en utilisant des moyens classiques pour la sortie du contenu du message, le décodeur comprenant :
- un décodeur de commande (920) qui est configuré pour décoder le groupe de caractères de commande (911) pour fournir l'information de commande du débit (921) et
- un dispositif de débit (920) qui est configuré pour délivrer le contenu du message (912) en fonction des informations de commande du débit (921) en fournissant un effet spécial audible, visuel et/ou tactile de notification.

12. Document électronique (780) **caractérisé en ce que** le document électronique (780) contenant le contenu du message (712) à sortir et des informations de commande du débit (711) pour commander le débit à un destinataire en émettant un effet spécial audible, visuel et/ou tactile de notification au dispositif récepteur en réponse à la réception du document électronique, le document électronique (780) comprenant :
le contenu du message (712), et
des informations de commande du débit (711) codées en un groupe de caractères de commande (721) qui produisent un effet qui est essentiellement indiscernable pour l'utilisateur lorsque le document électronique (780) est sorti en utilisant des moyens classiques pour sortir les informations de contenu.

13. Document (780) selon la revendication 12, **caractérisé en ce que** les caractères de commande (721) comprennent fonctionnellement au moins un des suivants : retour chariot, tabulation, barre d'espacement et interligne.
